(19)

Europäisches
Patentamt
European
Patent Office
Office européen
des brevets

(11) **EP 2 899 974 A1**

(12) **EUROPEAN PATENT APPLICATION**
published in accordance with Art. 153(4) EPC

(43) Date of publication:
**29.07.2015 Bulletin 2015/31**

(21) Application number: **13838663.6**

(22) Date of filing: **16.08.2013**

(51) Int Cl.:
***H04N 19/00*** (2014.01)

(86) International application number:
**PCT/JP2013/004876**

(87) International publication number:
**WO 2014/045515 (27.03.2014 Gazette 2014/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.09.2012 JP 2012203879**

(71) Applicant: **NEC Corporation
Tokyo 108-8001 (JP)**

(72) Inventor: **CHONO, Keiichi
Tokyo 108-8001 (JP)**

(74) Representative: **Vossius & Partner
Patentanwälte Rechtsanwälte mbB
Siebertstrasse 3
81675 München (DE)**

(54) **VIDEO CODING DEVICE, VIDEO CODING METHOD, AND VIDEO CODING PROGRAM**

(57) A video coding device for coding video based on a recursive quadtree structure includes: a coding cost decision unit 11 for deciding a node coding cost of a node image block corresponding to a node to be processed; a child node coding cost decision unit 12 for deciding a child node coding cost of each of child node image blocks corresponding to four child nodes of the node to be processed; a representative child node selection unit 13 for selecting one or more representative child nodes from the four child nodes of the node to be processed; a normalization unit 14 for normalizing the node coding cost based on the number of the selected one or more representative child nodes; and a divide decision unit 15 for comparing the normalized node coding cost with child node coding costs of the representative child nodes, to decide whether or not to divide the node to be processed.

**FIG. 5**

**Description**

**Technical Field**

The present invention is a quadtree structure decision technique in a video coding scheme based on a recursive quadtree structure such as HEVC, and is suitably applied to, for example, a video coding device.

**Background Art**

In the video coding scheme based on the description of Non Patent Literature (NPL) 1, each frame of digitized video is divided into coding tree units (CTUs), and each CTU is coded in raster scan order. Each CTU is divided into coding units (CUs) and coded, in a quadtree structure. Each CU is divided into prediction units (PUs) and predicted. The prediction error of each CU is divided into transform units (TUs) and frequency-transformed, in a quadtree structure.

A CU is a unit of coding in intra prediction/inter-frame prediction. The following describes intra prediction and inter-frame prediction.

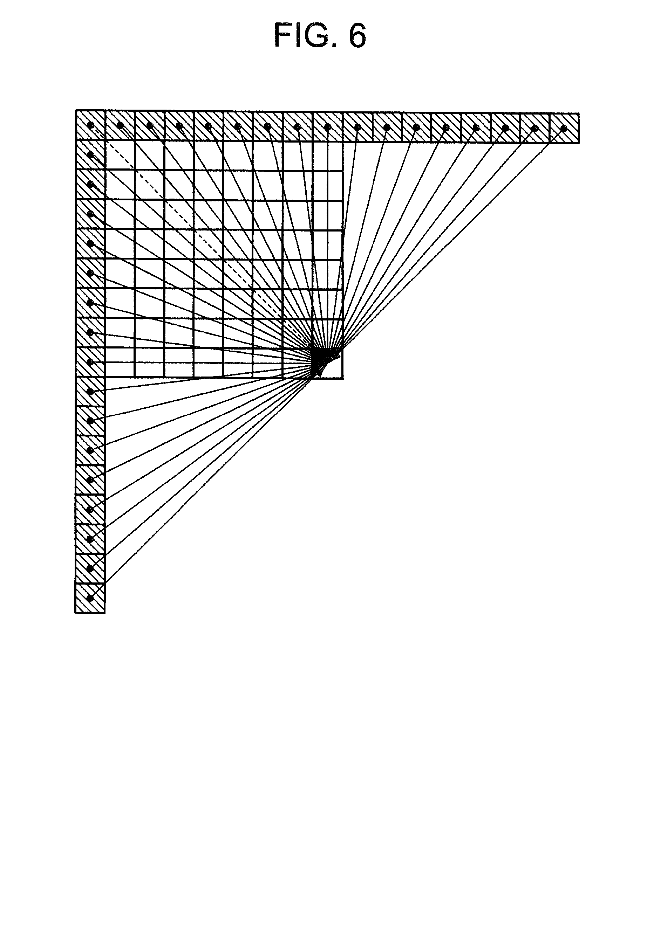

Intra prediction is prediction from a reconstructed image of a frame to be coded. NPL 1 defines, for example, 33 types of angular intra prediction depicted in Fig. 6.
In angular intra prediction, a reconstructed pixel near a block to be coded is used for extrapolation in any of 33 directions depicted in Fig. 6, to generate an intra prediction signal. A CU using intra prediction is hereafter referred to as "intra CU".

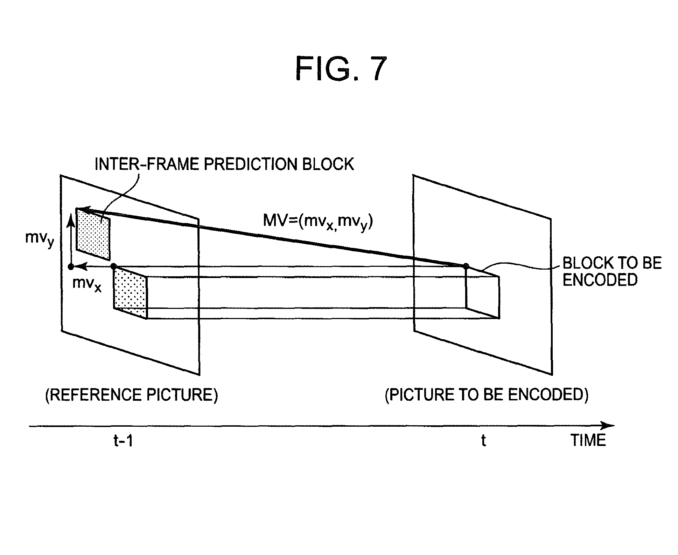

Inter-frame prediction is prediction based on an image of a reconstructed frame (reference picture) different in display time from a frame to be coded. Inter-frame prediction is hereafter also referred to as "inter prediction". Fig. 7 is an explanatory diagram depicting an example of inter-frame prediction. A motion vector MV = $(mv_x, mvy)$ indicates the amount of translation of a reconstructed image block of a reference picture relative to a block to be coded. In inter prediction, an inter prediction signal is generated based on a reconstructed image block of a reference picture (using pixel interpolation if necessary). A CU using inter prediction is hereafter referred to as "inter CU".

A frame coded including only intra CUs is called "I frame" (or "I picture"). A frame coded including not only intra CUs but also inter CUs is called "P frame" (or "P picture"). A frame coded including inter CUs that each use not only one reference picture but two reference pictures simultaneously for the inter prediction of the block is called "B frame" (or "B picture").

This completes the description of intra prediction and inter-frame prediction.

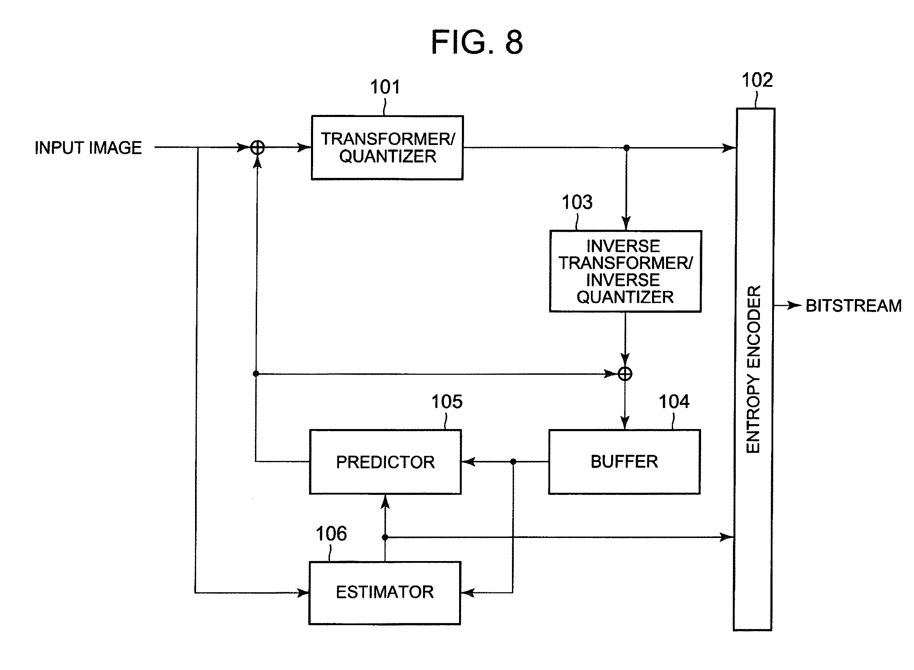

The following describes the structure and operation of a typical video coding device that receives each CU of each frame of digitized video as an input image and outputs a bitstream, with reference to Fig. 8.

A video coding device depicted in Fig. 8 includes a transformer/quantizer 101, an entropy coder 102, an inverse transformer/inverse quantizer 103, a buffer 104, a predictor 105, and an estimator 106.

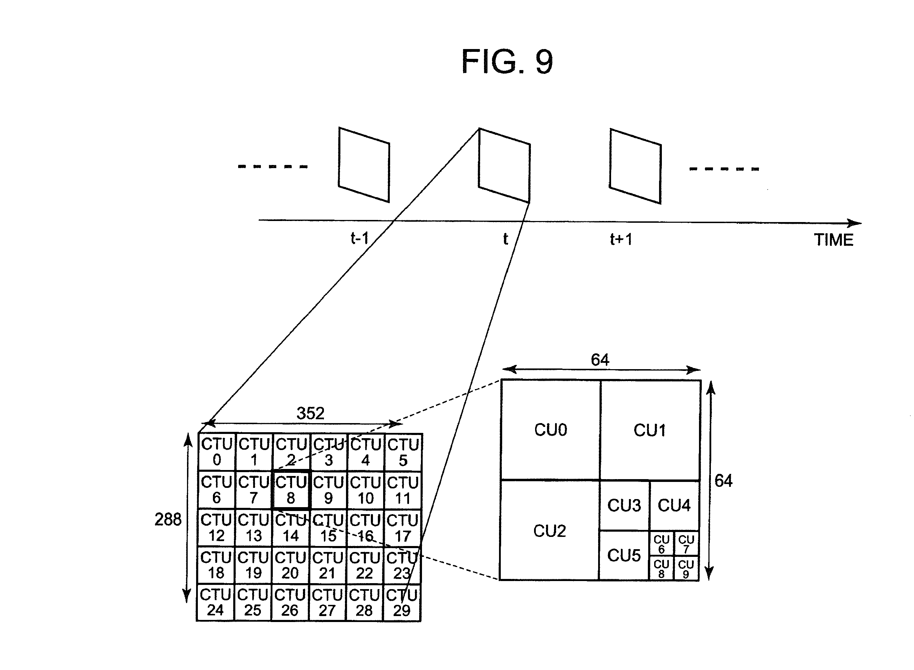

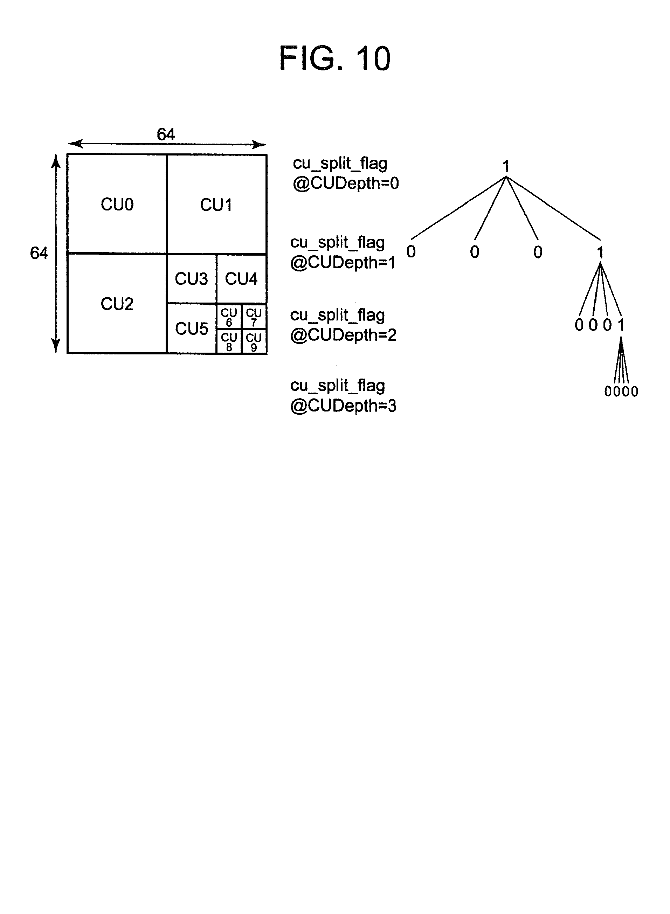

Fig. 9 is an explanatory diagram depicting an example of CTU partitioning of frame t and an example of CU partitioning of CTU8 of frame t, in the case where the spatial resolution of the frame is the common intermediate format (CIF) and the CTU size is 64. Fig. 10 is an explanatory diagram depicting a quadtree structure corresponding to the example of CU partitioning of CTU8.

The quadtree structure of CTU8 can be expressed by: cu_split_flag = 1 at CUDepth = 0 indicating that the 64x64 region is divided; three cu_split_flag = 0 at CUDepth = 1 indicating that the first three 32x32 CUs (CU0, CU1, and CU2) are not divided; cu_split_flag = 1 at CUDepth = 1 indicating that the last 32x32 CU is divided; three cu_split_flag = 0 at CUDepth = 2 indicating that the first three 16x16 CUs (CU3, CU4, and CU5) are not divided; cu_split_flag = 1 at CUDepth = 2 indicating that the last 16×16 CU is divided; and four cu_split_flag = 0 at CUDepth = 3 indicating that none of the 8×8 CUs (CU6, CU7, CU8, and CU9) is divided.

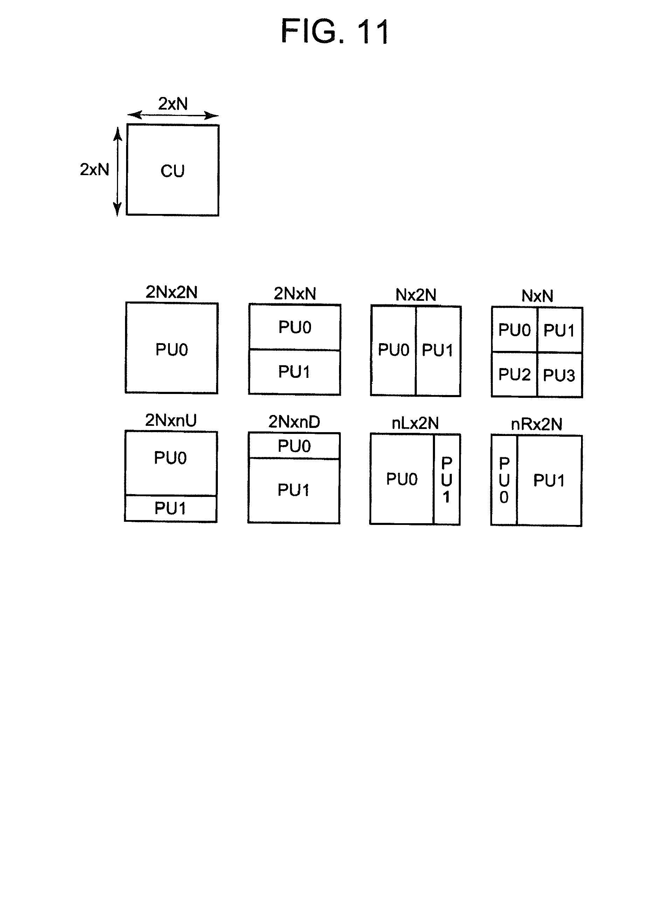

Fig. 11 is an explanatory diagram depicting PU splitting pattern of a CU. In the case where the CU is intra predicted, square PU partitioning is selectable (if the CU is larger than the minimum size, only 2N×2N is selectable). In the case where the CU is inter predicted, PU partitioning other than N×N is selectable if the CU is larger than 8 (if the CU is 8, only any of 2N×2N, 2N×N, and N×2N is selectable).

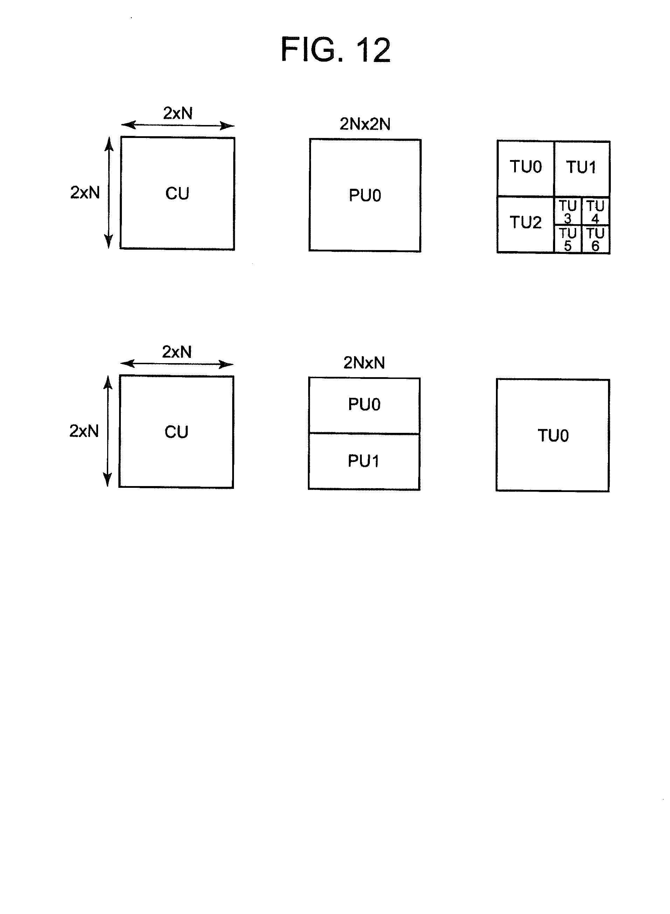

Fig. 12 is an explanatory diagram depicting examples of TU partitioning of a CU. The upper part of the drawing depicts an example of TU partitioning of a CU of an intra predicted 2N×2N PU. In the case where the CU is intra predicted, the root of the quadtree is located in the PU, and the prediction error is expressed by the quadtree structure. The lower part of the drawing depicts an example of TU partitioning of a CU of an inter predicted 2N×N PU. In the case where the CU is inter predicted, the root of the quadtree is located in the CU, and the prediction error is expressed by the quadtree structure.

The estimator 106 decides, for each CTU, a CU quadtree structure/PU splitting pattern/TU quadtree structure that minimizes the coding cost.

The following describes the CU quadtree structure/PU splitting pattern decision process described in NPL 2.

The section 4.8.3 Intra/Inter/PCM mode decision in NPL 2 discloses the CU level mode decision process. The CU level mode decision process is a process of deciding a PU splitting pattern and intra prediction/inter prediction of a CU. The section also discloses the CU quadtree structure decision process of recursively performing the CU level mode decision process for each depth (CUDepth) of a CU quadtree.

The CU level mode decision process is described first. InterCandidate which is a set of PU splitting pattern candidates of inter prediction, IntraCandidate which is a set of PU splitting pattern candidates of intra prediction, and $J_{SSE}$(mode) which is a sum of square error (SSE) coding cost of a mode (mode) are defined as follows.

$$\text{InterCandidate} = \{\text{INTER\_2N×2N, INTER\_2N×N,}$$

$$\text{INTER\_N×2N, INTER\_2N×N, INTER\_N×2N, INTER\_2N×nU,}$$

$$\text{INTER\_2N×nD, INTER\_nL×2N, INTER\_nR×2N, INTER\_N×N}\}.$$

$$\text{IntraCandidate} = \{\text{INTRA\_2N×2N, INTRA\_N×N}\}.$$

$$J_{SSE}(\text{mode}) = D_{SSE}(\text{mode}) + \lambda_{mode} \cdot R_{mode}(\text{mode}).$$

$$\lambda_{mode} = 2^{(QP-12)/3}.$$

Here, $D_{SSE}$(mode) denotes the SSE of the input image signal of the CU and the reconstructed image signal using mode, $R_{mode}$(mode) denotes the number of bits of the CU coded using mode (including the number of bits of the below-mentioned transform quantization value), and QP denotes a quantization parameter.

In the CU level mode decision process, bestPUmode which is the PU splitting pattern and intra prediction/inter prediction that minimize the SSE coding cost $J_{SSE}$(mode) is selected from InterCandidate and IntraCandidate. The CU level mode decision process can be formulated as follows.

[Math. 1]

$$bestPUmode = \arg\min_{PUmode \in PUCandidate}\{J_{SSE}(PUmode)\}$$

$$\text{PUCandidate} = \{\text{InterCandidate, IntraCandidate}\}.$$

This completes the description of the CU level mode decision process. The CU quadtree structure decision process is described next.

The SSE coding cost of the CU (hereafter referred to as "node") at CUDepth is the SSE coding cost of best-PUmode of the CU. The node SSE coding cost $J_{SSE}$(node, CUDepth) is thus defined as follows.

[Math. 2]

$$J_{SSE}(node, CUDepth) = \min_{PUmode \in PUCandidate}\{J_{SSE}(PUmode)\}$$

The SSE coding cost of the i-th ($1 \leq i \leq 4$) child CU (hereafter referred to as "child node", "leaf", or the like) of the CU at CUDepth is the SSE coding cost of the CU at CUDepth+1. The SSE coding cost $J_{SSE}$(leaf(i), CUDepth) of the i-th leaf is thus defined as follows.

$$J_{SSE}(\text{leaf(i), CUDepth}) = J_{SSE}(\text{node, CUDepth+1}).$$

Whether or not to divide the CU into child CUs can be decided by comparing whether or not the SSE coding cost of the node is greater than the sum of the SSE coding costs of its leaves. In the case where $J_{SSE}$(node, CUDepth) is greater than the value of Expression 1 given below, the CU is set to be divided into child CUs (cu_split_flag = 1).

[Math. 3]

$$\sum_{i=1}^{4} J_{SSE}(leaf(i), CUDepth)$$

(Expression 1)

Otherwise (in the case where $J_{SSE}$(node, CUDepth) is not greater than the value of Expression 1 given above), the CU is set not to be divided into child CUs (cu_split_flag = 0).

In the CU quadtree structure decision process, the above-mentioned comparison is recursively performed for each CUDepth, to decide the quadtree structure of the CTU (in other words, cu_split_flag of each leaf is decided for each CUDepth).

This completes the description of the CU quadtree structure decision process.

The TU quadtree structure can be decided by the same process as the CU quadtree structure decision process described above.

The predictor 105 generates a prediction signal corresponding to the input image signal of the CU, based on the CU quadtree structure and PU splitting pattern decided by the estimator 106. The prediction signal is generated based on the above-mentioned intra prediction or inter prediction.

The transformer/quantizer 101 frequency-transforms a prediction error image obtained by subtracting the prediction signal from the input image signal, based on the TU quadtree structure decided by the estimator 106.

The transformer/quantizer 101 further quantizes the frequency-transformed prediction error image (frequency transform coefficient). The quantized frequency transform coefficient is hereafter referred to as "transform quantization value".

The entropy coder 102 entropy-codes cu_split_flag indicating the quadtree structure of the CTU, the prediction parameter, and the transform quantization value.

The inverse transformer/inverse quantizer 103 inverse-quantizes the transform quantization value. The inverse transformer/inverse quantizer 103 further inverse-frequency-transforms the frequency transform coefficient obtained by the inverse quantization. The prediction signal is added to the reconstructed prediction error image obtained by the inverse frequency transform, and the result is supplied to the buffer 104.

The buffer 104 stores the reconstructed image.

The typical video coding device generates a bitstream based on the operation described above.

Citation List

Non Patent Literatures

NPL 1: High efficiency video coding (HEVC) text specification draft 7, JCTVC-I1003_d9, Joint Collaborative Team on Video Coding (JCT-VC) of ITU-T SG16 WP3 and ISO/IEC JTC1/SC29/WG11 9th Meeting: Geneva, CH, 27 April-7 May 2012.

NPL 2: HM7: High Efficiency Video Coding (HEVC) Test Model 7 Encoder Description, JCTVC-I1002, Joint Collaborative Team on Video Coding (JCT-VC) of ITU-T SG16 WP3 and ISO/IEC JTC1/SC29/WG11 9th Meeting: Geneva, CH, 27 April-7 May 2012.

Summary of Invention

Technical Problem

It is known that, in the case where the prediction error of a node CU locally includes a large value, quantization noise spreads in the reconstructed image (2N×2N size) of the whole node CU due to frequency transform and quantization, as a result of which ringing noise occurs.

The technique of simply comparing the SSE coding cost $J_{SSE}$(node, CUDepth) of a node CU and the sum of the SSE coding costs of its leaf CUs (see Expression 1 given above) decides the CU quadtree structure without taking such a locally large prediction error into consideration. Accordingly, non-divide is often selected incorrectly, which causes ringing noise.

Ringing noise is more noticeable in the case where the following SAD coding cost $J_{SAD}$(mode) or SATD coding cost $J_{SATD}$(mode) that does not use the reconstructed image is employed instead of the SSE coding cost.

$$J_{SAD}(mode) = D_{SAD}(mode) + \lambda_{motion} \cdot R_{motion}(mode).$$

$$J_{SATD}(mode) = D_{SATD}(mode) + \lambda_{motion} \cdot R_{motion}(mode).$$

$$\lambda_{motion} = 2^{(QP-12)/6}.$$

Here, $D_{SAD}(mode)$ denotes the sum of absolute difference (SAD) of the input image signal of the CU and the prediction signal using mode, $R_{mode}(mode)$ denotes the number of bits of the header of the CU coded using mode (not including the number of bits of the transform quantization value), and $D_{SATD}(mode)$ denotes the sum of absolute Hadamard transformed difference (SATD) of the input image signal of the CU and the prediction signal using mode.

The present invention has an object of providing a video coding device, a video coding method, and a video coding program that can prevent ringing noise.

**Solution to Problem**

A video coding device according to the present invention is a video coding device for coding video based on a recursive quadtree structure, the video coding device including: means for deciding a node coding cost of a node image block corresponding to a node to be processed; means for deciding a child node coding cost of each of child node image blocks corresponding to four child nodes of the node to be processed; means for selecting one or more representative child nodes from the four child nodes of the node to be processed; means for normalizing the node coding cost based on the number of the selected one or more representative child nodes; and means for comparing the normalized node coding cost with child node coding costs of the representative child nodes, to decide whether or not to divided the node to be processed.

A video coding method according to the present invention is a video coding method for coding video based on a recursive quadtree structure, the video coding method including: deciding a node coding cost of a node image block corresponding to a node to be processed; deciding a child node coding cost of each of child node image blocks corresponding to four child nodes of the node to be processed; selecting one or more representative child nodes from the four child nodes of the node to be processed; normalizing the node coding cost based on the number of the selected one or more representative child nodes; and comparing the normalized node coding cost with child node coding costs of the representative child nodes, to decide whether or not to divide the node to be processed.

A video coding program according to the present invention is a video coding program implemented in a computer for coding video based on a recursive quadtree structure, the video coding program causing the computer to execute: a process of deciding a node coding cost of a node image block corresponding to a node to be processed; a process of deciding a child node coding cost of each of child node image blocks corresponding to four child nodes of the node to be processed; a process of selecting one or more representative child nodes from the four child nodes of the node to be processed; a process of normalizing the node coding cost based on the number of the selected one or more representative child nodes; and a process of comparing the normalized node coding cost with child node coding costs of the representative child nodes, to decide whether or not to divide the node to be processed.

**Advantageous Effects of Invention**

According to the present invention, the coding cost of the node to be processed which is normalized based on the number of representative child nodes is compared with the coding costs of the representative child nodes of the four child nodes of the node to be processed, to decide divide/non-divide of the node to be processed. In the case where the prediction error of the node to be processed locally includes a large value, the sum of the coding costs of the representative child nodes is smaller than the normalized coding cost. Hence, the divide of the node to be processed is selected in the case where the prediction error of the node to be processed locally includes a large value. The video coding device using the present invention decides the CU quadtree structure in consideration of a locally large prediction error, and so can prevent ringing noise.

**Brief Description of Drawings**

[Fig. 1] It is a block diagram depicting an exemplary embodiment of a video coding device according to the present invention.

[Fig. 2] It is an explanatory diagram depicting a structural example of an estimator according to the present invention.

[Fig. 3] It is an explanatory diagram depicting an operation example of the estimator according to the present invention.

[Fig. 4] It is a block diagram depicting an example of an information processing system using a program according to the present invention.

[Fig. 5] It is a block diagram depicting main parts of a video coding device according to the present invention.

[Fig. 6] It is an explanatory diagram depicting an example of 33 types of angular intra prediction.

[Fig. 7] It is an explanatory diagram depicting an example of inter-frame prediction.

[Fig. 8] It is an explanatory diagram depicting the structure of a typical video coding device.

[Fig. 9] It is an explanatory diagram depicting an example of CTU partitioning of frame t and an example of CU partitioning of CTU8 of frame t.

[Fig. 10] It is an explanatory diagram depicting a quadtree structure.

[Fig. 11] It is an explanatory diagram depicting PU splitting pattern of a CU.

[Fig. 12] It is an explanatory diagram depicting examples of TU partitioning of a CU.

## Description of Embodiment

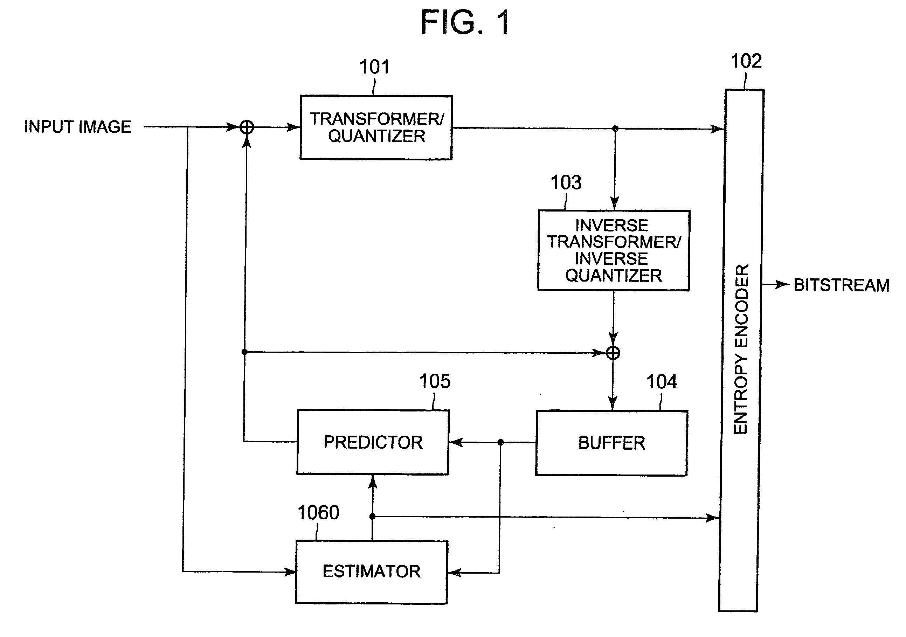

The following describes the structure and operation of a video coding device that receives each frame of digitized video as an input image and outputs a bitstream in this exemplary embodiment, with reference to Fig. 1.

A video coding device depicted in Fig. 1 includes the transformer/quantizer 101, the entropy coder 102, the inverse transformer/inverse quantizer 103, the buffer 104, and the predictor 105, like the video coding device depicted in Fig. 6. The video coding device in this exemplary embodiment further includes an estimator 1060.

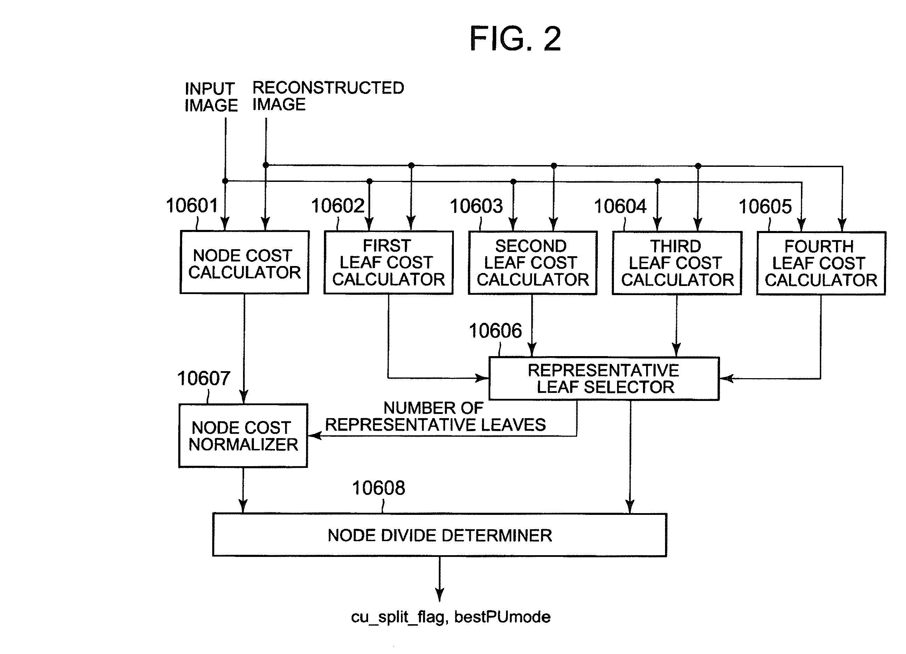

The following describes the structure and operation of the estimator 1060 representing a feature of the present invention, with reference to Fig. 2.

The estimator 1060 includes a node cost calculator 10601, a first leaf cost calculator 10602, a second leaf cost calculator 10603, a third leaf cost calculator 10604, a fourth leaf cost calculator 10605, a representative leaf selector 10606, a node cost normalizer 10607, and a node divide determiner 10608. The estimator 1060 decides a CU quadtree structure/PU splitting pattern of a CTU.

The node cost calculator 10601 selects bestPUmode which is the PU splitting pattern and intra prediction/inter prediction that minimize the above-mentioned SATD coding cost $J_{SATD}$(mode), for a CU at the current CUDepth. This is formulated as follows.

[Math. 4]

$$bestPUmode = \arg\min_{PUmode \in PUCandidate} \{J_{SATD}(PUmode)\}$$

The node cost calculator 10601 then sets the SATD coding cost $J_{SATD}$(node, CUDepth) of the CU to the SATD coding cost of bestPUmode. This is formulated as follows.

[Math. 5]

$$J_{SATD}(node, CUDepth) = \min_{PUmode \in PUCandidate} \{J_{SATD}(PUmode)\}$$

Here, the SATD coding cost of the i-th ($1 \leq i \leq 4$) child CU (hereafter referred to as "child node", "leaf", or the like) of the CU is the SATD coding cost of the CU at CUDepth+1. The SATD coding cost $J_{SATD}$(leaf(i), CUDepth) of the i-th ($1 \leq i \leq 4$) leaf CU is defined as follows.

$$J_{SATD}(leaf(i), CUDepth) = J_{SATD}(node, CUDepth+1).$$

The first leaf cost calculator 10602 calculates the SATD coding cost $J_{SATD}$(leaf(1), CUDepth) of the first leaf (i = 1) of the CU. In other words, the first leaf cost calculator 10602 selects bestPUmode which is the PU splitting pattern and intra prediction/inter prediction that minimize the SATD coding cost $J_{SATD}$(mode), for the first leaf (i = 1) of the CU.

Likewise, the second leaf cost calculator 10603, the third leaf cost calculator 10604, and the fourth leaf cost calculator 10605 calculate the SATD coding costs $J_{SATD}$(leaf(i), CUDepth) of the second leaf (i = 2), the third leaf (i = 3), and the fourth leaf (i = 4) of the CU, respectively.

The relationship between a node and leaves (the relationship between a CU and child CUs) is described in more detail using an example. Suppose the CTU size is 64. The first leaf of the node at CUDepth = 0 corresponds to the upper left 32x32 image block in the 64x64 image block. Likewise, the second leaf, the third leaf, and the fourth leaf of the node at CUDepth = 0 correspond to the upper right 32x32 image block, the lower left 32x32 image block, and the lower right 32x32 image block in the 64x64 image block, respectively.

The representative leaf selector 10606 selects K ($1 \leq K \leq 4$) representative leaves, based on the SATD coding cost $J_{SATD}$(leaf(i), CUDepth) of each leaf. In detail, the representative leaf selector 10606 selects the L-th ($1 \leq L < 4$) to M-th ($L < M \leq 4$) leaves in ascending order of SATD coding cost, as the representative leaves. The SATD coding cost sorted in ascending order is defined as $J'_{SATD}$(leaf(i), CUDepth), for subsequent description.

The representative leaf selector 10606 supplies the number K of representative leaves and $J'_{SATD}$(leaf(i), CUDepth) ($L \leq i \leq M$) of the representative leaves, respectively to the node cost normalizer 10607 and the node divide determiner 10608.

The node cost normalizer 10607 normalizes the node SATD coding cost $J_{SATD}$(node, CUDepth) supplied from the node cost calculator 10601, with the number K of representative leaves. The normalized node SATD coding cost is defined as $J'_{SATD}$(node, CUDepth), for subsequent description. This is formulated as follows.

$$\text{J'}_{SATD}(\text{leaf(i), CUDepth}) = J_{SATD}(\text{leaf(i), CUDepth})/K.$$

The node divide determiner 10608 compares the normalized node SATD coding cost with the SATD coding costs of the representative leaves, to decide whether or not to divide the CU at the current CUDepth (decide cu_split_flag). In detail, in the case where $J'_{SATD}$(node, CUDepth) is greater than the value of Expression 2 given below, the node divide determiner 10608 decides to divide the CU (cu_split_flag = 1).

[Math. 6]

$$\sum_{i=L}^{M} J'_{SATD}(leaf(i), CUDepth) \qquad \text{(Expression 2)}$$

Otherwise (in the case where $J'_{SATD}$(node, CUDepth) is not greater than the value of Expression 2 given above), the node divide determiner 10608 decides not to divide the CU (cu_split_flag = 0).

The estimator 1060 recursively performs the above-mentioned comparison for each CUDepth, and decides the CU quadtree structure/PU splitting pattern of the CTU.

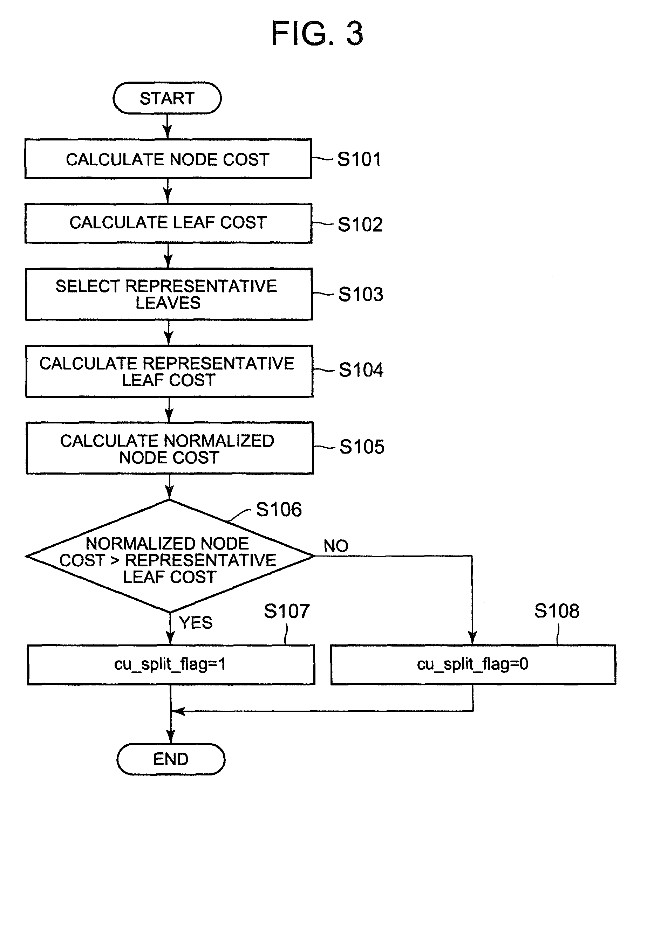

The following describes the operation of the estimator 1060, with reference to Fig. 3.

In step S101, the node cost calculator 10601 calculates the SATD coding cost $J_{SATD}$(node, CUDepth) of the CU at the current CUDepth.

In step S102, the first leaf cost calculator 10602, the second leaf cost calculator 10603, the third leaf cost calculator 10604, and the fourth leaf cost calculator 10605 calculate the SATD coding costs $J_{SATD}$(leaf(i), CUDepth) ($1 \leq i \leq 4$) of the respective child CUs (leaves) of the CU.

In step S103, the representative leaf selector 10606 selects K ($1 \leq K \leq 4$) representative leaves, based on the SATD coding cost $J_{SATD}$(leaf(i), CUDepth) ($1 \leq i \leq 4$) of each leaf.

In step S104, the node divide determiner 10608 calculates the sum of the SATD coding costs of the representative leaves (see Expression 2 given above).

In step S105, the node cost normalizer 10607 calculates the normalized node SATD coding cost $J'_{SATD}$(node, CUDepth) based on the number K of representative leaves.

In step S106, the node divide determiner 10608 determines whether or not $J'_{SATD}$(node, CUDepth) is greater than the value of Expression 2 given above. In the case where $J'_{SATD}$(node, CUDepth) is greater than the value of Expression 2, the operation proceeds to step S107. Otherwise, the operation proceeds to step S108.

In step S107, the node divide determiner 10608 decides to divide the CU at the current CUDepth (cu_split_flag = 1), and ends the divide/non-divide decision for the CU at the current CUDepth.

In step S108, the node divide determiner 10608 decides not to divide the CU at the current CUDepth (cu_split_flag = 0), and ends the divide/non-divide decision for the CU at the current CUDepth.

This completes the description of the structure and operation of the estimator 1060 representing a feature of the present invention.

The estimator 1060 in this exemplary embodiment described above compares the coding cost of the node to be processed which is normalized based on the number of representative child nodes with the coding costs of the representative child nodes (representative leaves) of the four child nodes (leaves) of the node to be processed, to decide divide/non-divide of the node to be processed. In the case where the prediction error of the node to be processed locally includes a large value, the sum of the coding costs of the representative leaves (see Expression 2 given above) is smaller than the normalized coding cost ($J'_{SATD}$(node, CUDepth)). Hence, the divide of the node to be processed is selected (cu_split_flag = 1 is selected) in the case where the prediction error of the node to be processed locally includes a large value. The video coding device in this exemplary embodiment decides the CU quadtree structure in consideration of a locally large prediction error, and so can prevent ringing noise.

In the exemplary embodiment described above, the same advantageous effects can be achieved even when the Hadamard transform block size used to calculate the SATD coding cost $J_{SATD}$(mode) is fixed at 8x8 or 4×4, regardless of the CU size (2N×2N).

In the exemplary embodiment described above, the same advantageous effects can be achieved even when the SAD coding cost $J_{SAD}$(mode) or the SSE coding cost $J_{SSE}$(mode) is used instead of the SATD coding cost $J_{SATD}$(mode).

In the exemplary embodiment described above, the number K of representative leaves may be changed according to the size of the CU at the current CUDepth. For example, given that ringing noise is more noticeable in a larger CU, K may be set so that K = 1 (L = 1 and M = 1) for a CU larger than a predetermined size, and K = 3 (L = 1 and M = 3) for a CU smaller than the predetermined size. Here, K = 1 (L = 1 and M = 1) is equivalent to the case where the representative leaf selector 10606 selects the leaf associated with the minimum leaf coding cost.

The above-mentioned CU quadtree structure decision by the estimator 1060 may be applied to the TU quadtree structure decision, thus enabling the TU quadtree structure to be decided in consideration of a locally large prediction error.

Each of the aforementioned exemplary embodiments can be implemented in hardware or in a computer program.

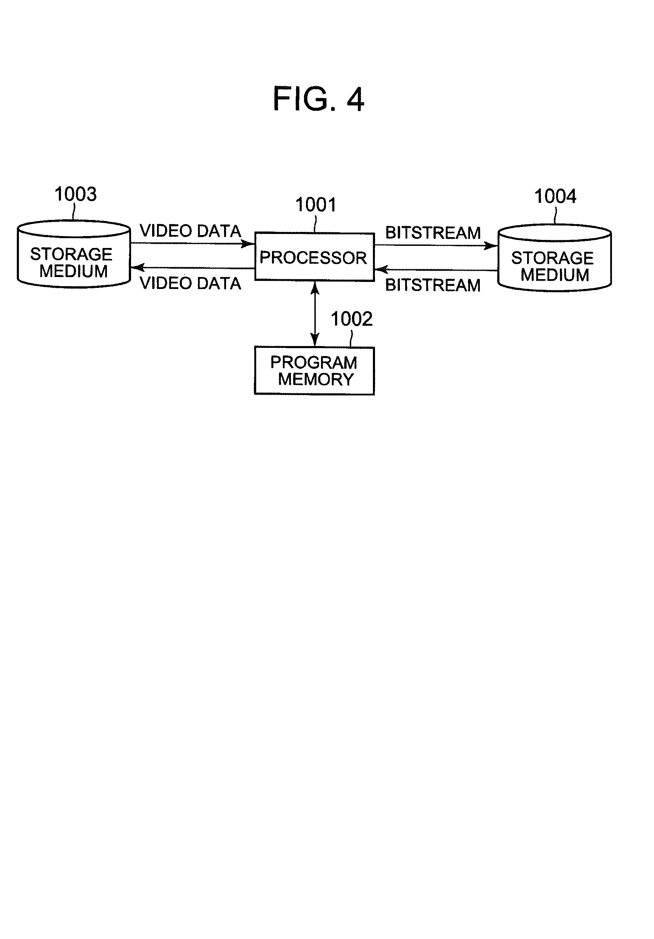

An information processing system shown in Fig. 4 includes a processor 1001, a program memory 1002, a storage medium 1003 for storing video data, and a storage medium 1004 for storing a bitstream. The storage medium 1003 and the storage medium 1004 may be different storage media, or storage areas included in the same storage medium. A magnetic storage medium such as a hard disk can be used as a storage medium.

In the information processing system shown in Fig. 4, a program for carrying out the function of carrying out the function of each block shown in Fig. 1 is stored in the program memory 1002. The processor 1001 performs processing according to the program stored in the program memory 1002 to carry out the function of the video encoding device shown in FIG. 1.

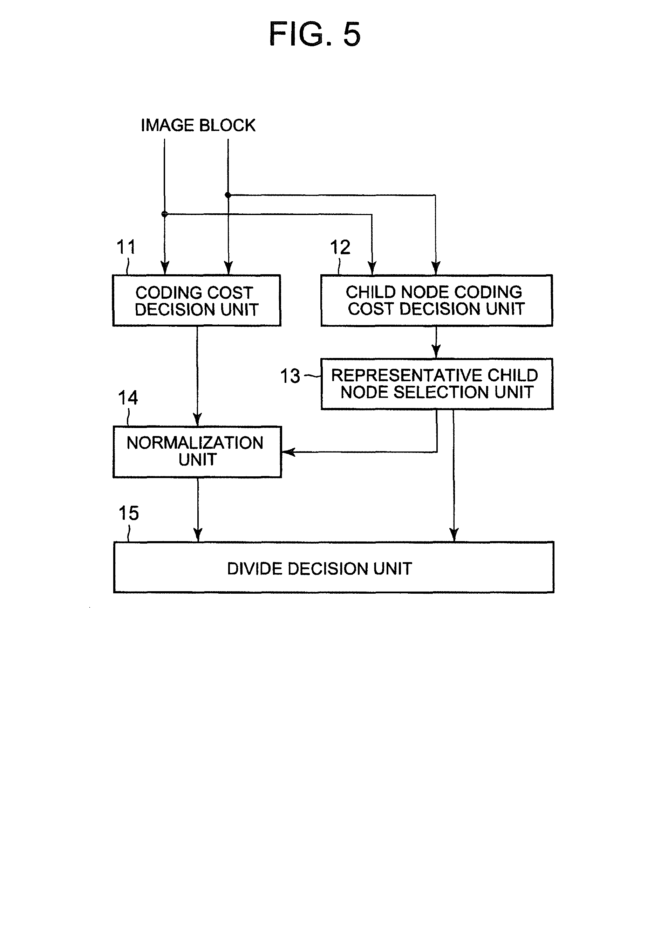

Fig. 5 is a block diagram depicting main parts of a video coding device according to the present invention. As depicted in Fig. 5, the video coding device according to the present invention is a video coding device for coding video based on a recursive quadtree structure, and includes: a coding cost decision unit 11 for deciding a node coding cost of a node image block corresponding to a node to be processed; a child node coding cost decision unit 12 for deciding a child node coding cost of each of child node image blocks corresponding to four child nodes of the node to be processed; a representative child node selection unit 13 for selecting one or more representative child nodes from the four child nodes of the node to be processed; a normalization unit 14 for normalizing the node coding cost based on the number of the selected one or more representative child nodes; and a divide decision unit 15 for comparing the normalized node coding cost with child node coding costs of the representative child nodes, to decide whether or not to divide the node to be processed.

Though the present invention has been described with reference to the above exemplary embodiments and examples, the present invention is not limited to the above exemplary embodiments and examples. Various changes understandable by those skilled in the art can be made to the structures and details of the present invention within the scope of the present invention.

This application claims priority based on Japanese Patent Application No. 2012-203879 filed on September 18, 2012, the disclosure of which is incorporated herein in its entirety.

**Reference Signs List**

| | |
|---|---|
| 11 | coding cost decision unit |
| 12 | child node coding cost decision unit |

| 13 | representative child node selection unit |
| 14 | normalization unit |
| 15 | divide decision unit |
| 101 | transformer/quantizer |
| 102 | entropy coder |
| 103 | inverse transformer/inverse quantizer |
| 104 | buffer |
| 105 | predictor |
| 106, 1060 | estimator |
| 10601 | node cost calculator |
| 10602 | first leaf cost calculator |
| 10603 | second leaf cost calculator |
| 10604 | third leaf cost calculator |
| 10605 | fourth leaf cost calculator |
| 10606 | representative leaf selector |
| 10607 | node cost normalizer |
| 10608 | node divide determiner |
| 1001 | processor |
| 1002 | program memory |
| 1003 | storage medium |
| 1004 | storage medium |

**Claims**

1. A video coding device for coding video based on a recursive quadtree structure, the video coding device comprising:

   means for deciding a node coding cost of a node image block corresponding to a node to be processed;
   means for deciding a child node coding cost of each of child node image blocks corresponding to four child nodes of the node to be processed;
   means for selecting one or more representative child nodes from the four child nodes of the node to be processed;
   means for normalizing the node coding cost based on the number of the selected one or more representative child nodes; and
   means for comparing the normalized node coding cost with child node coding costs of the representative child nodes, to decide whether or not to divide the node to be processed.

2. The video coding device according to claim 1, wherein the means for selecting one or more representative child nodes selects at least one and not more than four representative child nodes in ascending order of the child node coding cost.

3. The video coding device according to claim 2, wherein the number of representative child nodes is adjusted according to a size of the node image block corresponding to the node to be processed.

4. A video coding method for coding video based on a recursive quadtree structure, the video coding method comprising:

   deciding a node coding cost of a node image block corresponding to a node to be processed;
   deciding a child node coding cost of each of child node image blocks corresponding to four child nodes of the node to be processed;
   selecting one or more representative child nodes from the four child nodes of the node to be processed;
   normalizing the node coding cost based on the number of the selected one or more representative child nodes; and
   comparing the normalized node coding cost with child node coding costs of the representative child nodes, to decide whether or not to divide the node to be processed.

5. The video coding method according to claim 4, wherein when selecting one or more representative child nodes, at least one and not more than four representative child nodes are selected in ascending order of the child node coding cost.

6. The video coding method according to claim 5, wherein the number of representative child nodes is adjusted according to a size of the node image block corresponding to the node to be processed.

7. A video coding program implemented in a computer for coding video based on a recursive quadtree structure, the video coding program causing the computer to execute:

> a process of deciding a node coding cost of a node image block corresponding to a node to be processed;
> a process of deciding a child node coding cost of each of child node image blocks corresponding to four child nodes of the node to be processed;
> a process of selecting one or more representative child nodes from the four child nodes of the node to be processed;
> a process of normalizing the node coding cost based on the number of the selected one or more representative child nodes; and
> a process of comparing the normalized node coding cost with child node coding costs of the representative child nodes, to decide whether or not to divide the node to be processed.

8. The video coding program according to claim 7, causing the computer to, in the process of selecting one or more representative child nodes, select at least one and not more than four representative child nodes in ascending order of the child node coding cost.

9. The video coding program according to claim 8, causing the computer to adjust the number of representative child nodes according to a size of the node image block corresponding to the node to be processed.

# FIG. 1

# FIG. 2

INPUT IMAGE   RECONSTRUCTED IMAGE

10601 NODE COST CALCULATOR

10602 FIRST LEAF COST CALCULATOR

10603 SECOND LEAF COST CALCULATOR

10604 THIRD LEAF COST CALCULATOR

10605 FOURTH LEAF COST CALCULATOR

10606 REPRESENTATIVE LEAF SELECTOR

10607 NODE COST NORMALIZER

NUMBER OF REPRESENTATIVE LEAVES

10608 NODE DIVIDE DETERMINER

cu_split_flag, bestPUmode

EP 2 899 974 A1

# FIG. 3

START

CALCULATE NODE COST — S101

CALCULATE LEAF COST — S102

SELECT REPRESENTATIVE LEAVES — S103

CALCULATE REPRESENTATIVE LEAF COST — S104

CALCULATE NORMALIZED NODE COST — S105

S106

NORMALIZED NODE COST > REPRESENTATIVE LEAF COST

NO

YES    S107

cu_split_flag=1

S108

cu_split_flag=0

END

# FIG. 4

1003

1001

1004

STORAGE
MEDIUM

VIDEO DATA →

PROCESSOR

BITSTREAM →

STORAGE
MEDIUM

← VIDEO DATA

← BITSTREAM

1002

PROGRAM
MEMORY

# FIG. 5

IMAGE BLOCK

11 CODING COST DECISION UNIT

12 CHILD NODE CODING COST DECISION UNIT

13 REPRESENTATIVE CHILD NODE SELECTION UNIT

14 NORMALIZATION UNIT

15 DIVIDE DECISION UNIT

# FIG. 6

# FIG. 7

INTER-FRAME PREDICTION BLOCK

$MV=(mv_x, mv_y)$

$mv_y$

$mv_x$

BLOCK TO BE ENCODED

(REFERENCE PICTURE)

(PICTURE TO BE ENCODED)

t-1

t

TIME

# FIG. 8

EP 2 899 974 A1

# FIG. 9

EP 2 899 974 A1

# FIG. 10

# FIG. 11

# FIG. 12

2xN

2xN CU

2Nx2N

PU0

| TU0 | TU1 |
| TU2 | TU 3 / TU 4 |
|     | TU 5 / TU 6 |

2xN

2xN CU

2NxN

PU0

PU1

TU0

**INTERNATIONAL SEARCH REPORT**

| | International application No. |
| --- | --- |
| | PCT/JP2013/004876 |

**A. CLASSIFICATION OF SUBJECT MATTER**
*H04N7/26(2006.01)i*

According to International Patent Classification (IPC) or to both national classification and IPC

**B. FIELDS SEARCHED**

Minimum documentation searched (classification system followed by classification symbols)
H04N7/24-7/68

Documentation searched other than minimum documentation to the extent that such documents are included in the fields searched
Jitsuyo Shinan Koho       1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2012/077332 A1 (Panasonic Corp.), 14 June 2012 (14.06.2012), entire text; all drawings & US 2013/0148729 A1   & EP 2651128 A1 & CN 103053158 A | 1-9 |
| A | JP 11-164305 A (Mitsubishi Electric Corp.), 18 June 1999 (18.06.1999), entire text; all drawings & US 2003/0035477 A1   & KR 10-257175 B & CN 1197250 A | 1-9 |
| A | JP 2000-511366 A (Sarnoff Corp.), 29 August 2000 (29.08.2000), entire text; all drawings & US 6084908 A           & WO 1997/017797 A2 | 1-9 |

☐ Further documents are listed in the continuation of Box C.          ☐ See patent family annex.

| | |
| --- | --- |
| *     Special categories of cited documents: <br> "A"   document defining the general state of the art which is not considered   to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search <br>     01 November, 2013 (01.11.13) | Date of mailing of the international search report <br>     12 November, 2013 (12.11.13) |
| --- | --- |
| Name and mailing address of the ISA/ <br>     Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012203879 A

**Non-patent literature cited in the description**

- High efficiency video coding (HEVC) text specification draft 7, JCTVC-I1003_d9. *JTC1/SC29/WG11 9th Meeting: Geneva, CH,* 27 April 2012

- HM7: High Efficiency Video Coding (HEVC) Test Model 7 Encoder Description, JCTVC-I1002. *ITU-T SG16 WP3 and ISO/IEC JTC1/SC29/WG11 9th Meeting: Geneva, CH,* 27 April 2012